# EUROPÄISCHE PATENTSCHRIFT

(11) **EP 0 696 119 B1**
(45) Veröffentlichungstag und Bekanntmachung des Hinweises auf die Patenterteilung: **24.09.2003**
(21) Anmeldenummer: 95201930.5
(22) Anmeldetag: 13.07.1995
(51) Int. Cl.: H04L 12/56, H04Q 11/04

(54) **Verfahren zum Ermitteln einer Anzahl diskriminierter digitaler Dateneinheiten und zur Abschätzung der Antwortzeit**
Method for determining a number of discriminated digital data units and for estimation of response time
Méthode pour déterminer un nombre d'unités discriminées de données digitales et pour l'évaluation du temps de réponse

(30) Priorität: 28.07.1994 CH 238194
(43) Veröffentlichungstag der Anmeldung: 07.02.1996
(73) Patentinhaber: ALCATEL, 75008 Paris (FR)
(72) Erfinder: Grünenfelder, Reto, Dr., CH-8305 Dietlikon (CH)
(74) Vertreter: Schätzle, Albin, Dipl.-Phys.

(56) Entgegenhaltungen:
- EP-A- 0 446 956
- EP-A- 0 570 813

## Beschreibung

Die Erfindung liegt auf dem Gebiet der Datenflussüberwachung an Schnittstellen von Uebertragungseinrichtungen, namentlich von digitalen Kommunikationsnetzen, und betrifft ein Verfahren nach dem Oberbegriff des Patentanspruchs 1.

Die Uebertragung von Informationen irgendwelcher Art geschieht heute in vielen Anwendungsbereichen mittels digitaler Dateneinheiten. Die Form der Dateneinheiten ist dem Uebertragunsgmedium angepasst definiert, oft auch normiert. Beispiele dafür sind die Zellen des asynchronen Uebermittlungsverfahrens (ATM - Asynchronous Transfer Mode) oder die Rahmen eines regionalen Netzes (MAN - Metropolitan Area Network). Die Uebertragungsmedien sind so konzipiert, dass die Informationen mehrerer Quellen gleichzeitig dieselbe physische Uebertragungsvorrichtung benützen können. Dabei ergibt sich unmittelbar das Dilemma der optimalen Ausnützung. Es besteht darin, die zur Verfügung stehenden Kapazitäten für den Transport digitaler Dateneinheitenen über bestimmte Uebertragungsvorrichtungen wie Leitungen, Vermittlungseinheiten, Multiplexer usw. möglichst gut auszunützen, aber einerseits ohne über Gebühr Verstopfungen und Ausfälle in Kauf nehmen zu müssen und andererseits ohne die Benützer (Quellen) zu stark einzuschränken bzw. willkürlich abzublocken. Eine Entschärfung des Problems wird dadurch erreicht, dass mit den Benützern Vereinbarungen über die Sendemodalitäten getroffen werden. Soll die Einhaltung der Vereinbarung auf Seite der Uebertragungsvorrichtung überprüft und nötigenfalls bestraft werden können, bedingt dies eine Parameterüberwachung an einer Schnittstelle, sei dies an einer Benützer- oder einer Netz-Schnittstelle, in der Literatur hauptsächlich bekannt unter den englischen Begriffen "usage parameter control" und "policing". Eine Parameterüberwachung mit entsprechenden Folgemassnahmen, insbesondere das Verwerfen von Zellen, kann aber auch unabhängig von einer Benützervereinbarung sinnvoll oder notwendig sein, wenn es zum Beispiel darum geht, eine Vermittlungseinheit vor Ueberlast zu schützen.

Auf eine Verletzung der Vereinbarung antwortet die Parameterüberwachung durch eine Diskriminierung der nicht konformen Dateneinheit, üblicherweise ein Verwerfen oder ein Markieren zwecks späterer Sonderbehandlung oder späterem Ausscheiden. Es kann auch sein, dass mehrere benachbarte Dateneinheiten diskriminiert werden. Eine oder mehrere benachbarte diskriminierte Dateneinheiten werden als Block diskriminierter Dateneinheiten bezeichnet. Für die Beurteilung der Funktion der Parameterüberwachung ist die Antwortzeit als Zeit vom einen Block diskriminierter Dateneinheiten zum nächsten von ausschlaggebender Bedeutung. Ferner interessiert, wieviele Dateneinheiten betroffen sind. An der Parameterüberwachung selber liesse sich relativ einfach festhalten, zu welchem Zeitpunkt eine Diskriminierung einer nicht konformen Dateneinheit auftritt und wieviele Dateneinheiten hintereinander diskriminiert werden. Diese zusätzlichen Funktionen sind jedoch kaum je in die Parameterüberwachung integriert, einerseits aus Kosten-/Nutzenüberlegungen die Funktionsbeurteilung ist ja nur sporadisch vorzunehmen - andererseits der fehlenden Unabhängigkeit wegen. Vielmehr sollen die Antwortzeit und die Anzahl diskriminierter Dateneinheiten an einer anderen Stelle im Netz ermittelbar sein. Beispielsweise kann eine ATM-Vermittlungseinheit am Eingang eine Parameterüberwachung aufweisen, eine Messung zur Beurteilung der Funktion der Parameterüberwachung jedoch findet ausgangsseitig an einer von der Vermittlungseinheit entfernten Netz-Schnittstelle statt. Hier jedoch ergibt sich die Schwierigkeit, dass sich weder der Zeitpunkt messen lässt, zu dem eine Zelle verworfen wird (da sie ja gar nicht mehr vorhanden ist), noch sich abzählen lässt, wieviele Zellen verworfen wurden.

Es besteht daher die Aufgabe ein Verfahren anzugeben, das es ermöglicht, aus dem an einer bestimmten Stelle im digitalen Netz eintreffenden Strom von digitalen Dateneinheiten auf die Antwortzeit einer an anderer, unter Umständen weit entfernten Stelle im Netz wirkenden Parameterüberwachung und die Anzahl diskriminierter Dateneinheiten zu schliessen.

Das erfindungsgemässe Verfahren nach Patentanspruch 1 löst die Aufgabe, indem es an einer festen Stelle im Netz eine untere und eine obere Schranke der Zeit misst, innerhalb deren die Antwortzeit an diesem Ort liegt. Die a priori fehlende Information über den Ausfall einer oder meherer Dateneinheiten beschafft das Verfahren durch eine laufende Ueberwachung der in den Dateneinheiten mitgeführten Identifikationsnummern. Durch einen Vergleich der eintreffenden Folge mit der vereinbarungsgemäss bekannten Folge der Identifikationsnummern lassen sich nicht nur das Fehlen einer Dateneinheit sondern auch die Anzahl fehlender Dateneinheiten ermitteln. A posteriori lassen sich damit auch der Zeitpunkt des Eintreffens der letzten konformen Dateneinheit vor einem Block diskriminierter Dateneinheiten sowie die erste konforme Dateneinheit danach festhalten. Zusammen mit der bei der Initialisierung festgehaltenen Anfangszeit, ergibt sich daraus eine Messung der beiden Schranken für die Antwortzeit am Ort der Messung.

Das Verfahren, das den Schritt der Initialisierung, die wiederholten Schritte der Aufdatierung und den Schritt des Abspeicherns nach dem Festellen eine Lücke in der Folge der Dateneinheiten aufweist, hat den Vorteil, bei jeder eintreffenden Dateneinheit nur ganz wenige Operationen ausführen zu müssen. Für den häufigsten Fall der wiederholten Aufdatierung genügen eine Nummernextraktion, ein Ganzzahlvergleich, eine Inkrementierung und eine Subtraktion einer Konstanten von der aktuellen Zeit. Vor dem Abspeichern sind lediglich zwei weitere Subtraktionen vorzunehmen.

Das Verfahren ist bestens geeignet, unmittelbar wiederholt zu werden, indem die erste nicht diskriminierte Dateneinheit nach einer Lücke der erneuten Initialisierung dient. Es werden lediglich eine weitere Inkrementierung und eine weitere Subtraktion bei jeder Speicherung benötigt. Dieses ständige und lückenlose Erfassen der unteren und der oberen Schranke für die Antwortzeit sowie der Anzahl diskriminierter Dateneinheiten ermöglicht es, die gemessenen Werte direkt statistisch auszuwerten. Werden zudem ergänzend statistische Messungen am Strom der Dateneinheiten gemacht, wie etwa mittlere Rate (Dateneinheiten pro Zeiteinheit), Verzögerungsschwankung usw., und in die vorerwähnten Auswertungen miteinbezogen, so eröffnet sich dem Fachmann auf diesem Gebiet die Ermittlung aufschlussreicher Zusammenhänge, zum Beispiel durch eine Zeitreihenanalyse oder die Auswertung von Histogrammen.

Bevorzugt wird beim Initialisieren die Anfangszeit als Differenz zwischen der aktuellen Zeit, zu der die erste nicht diskriminierte Dateneinheit eintrifft, und deren Zeitstempel verwendet. Der Zeitstempel ist eine in der Dateneinheit mitgeführte Angabe zur Zeit, zu der die Dateneinheit an der Quelle in bestimmter Weise behandelt - zum Beispiel gesendet - wurde. Der Zeitstempel bezieht sich für jede Datenzelle auf den gleichen Bearbeitungszeitpunkt. Die Anfangszeit entspricht dann ungefähr der Uebertragungsverzögerung der Dateneinheit. Das Miterfassen dieser Anfangszeit kann bei der statistischen Auswertung ebenfalls sehr aufschlussreich sein. Für von der Parameterüberwachung weit entfernte Messstellen, zum Beispiel auf einem anderen Kontinent, resultiert auf diese Weise allerdings eine relativ grosse Anfangszeit, die hinderlich sein könnte. Eine Variante der Initialisierung sieht daher vor, die Differenz zur Festlegung der Anfangszeit um eine konstante Grösse, zum Beispiel den Mindestwert der Uebertragungsverzögerung, zu verkleinern. Eine derartige Anpassung der Anfangszeit kann auch direkt im Zeitstempel berücksichtigt werden.

Die Erfindung wird nachstehend am Beispiel einer ATM-Anordnung anhand dreier Figuren näher erläutert. Es zeigen:
- Figur 1:: eine prinzipielle Messanordnung;
- Figur 2:: schematisch die zeitliche Folge der Dateneinheiten am Sende- und Empfangsort, und
- Figur 3:: das Flussdiagramm der Verfahrensschritte.

Als konkretes Ausführungsbeispiel für die Anwendung des erfindungsgemässen Verfahrens wird eine Anordnung für das Testen einer ATM-Vermittlungseinheit zu Grunde gelegt. Die übertragenen Dateneinheiten sind ATM-Zellen und werden im Beispiel auch als Zellen bezeichnet. Die Erfindung ist aber keineswegs auf solche beschränkt. Sie lässt sich auf beliebige andere Dateneinheiten anwenden, auch solche, die für ander Schichten des OSI-Modells definiert sind.

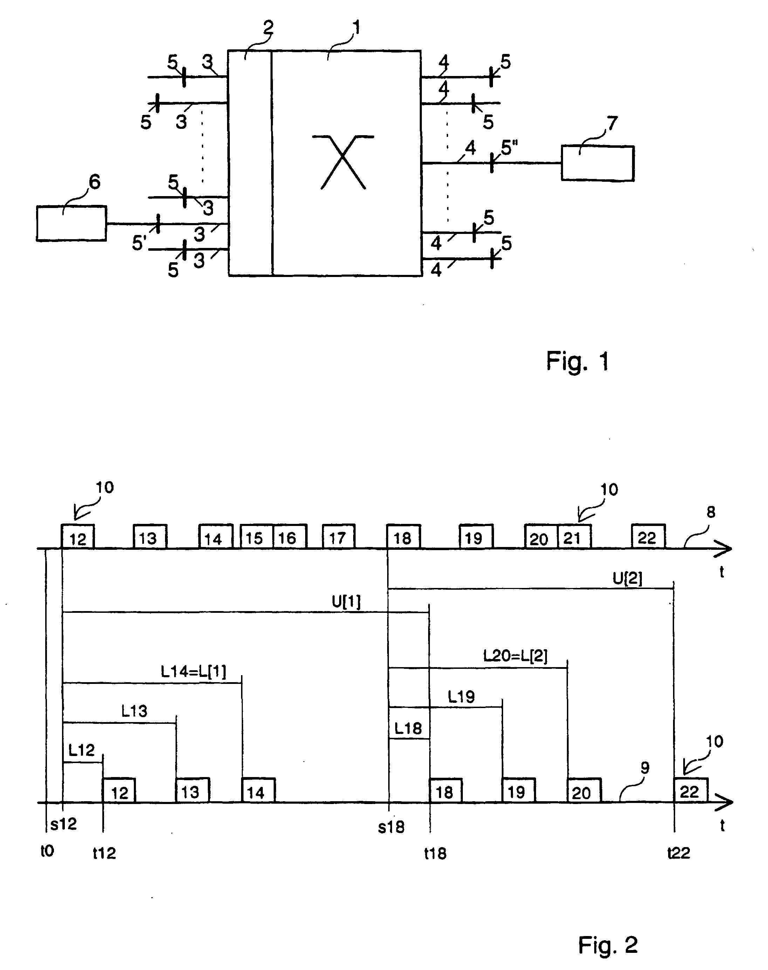

Die Figur 1 zeigt eine ATM-Vermittlungseinheit 1 mit je einer Vielzahl von Eingängen 3 und Ausgängen 4. Benützer- oder Netzzugänge sind je über eine Schnittstelle 5 angeschlossen. Die Eingänge 3 werden durch eine Parameterüberwachung 2 kontrolliert. An einer der Schnittstellen 5' am Eingang der Vermittlungseinheit ist ein Testgenerator 6 angeschlossen, an einer der Schnittstellen 5" am Ausgang ein Testanalysator 7. Für die Ueberprüfung der Parameterüberwachung 2 sendet der Testgenerator 6 Testzellen, deren Kopfinformation dafür sorgt, dass sie zum Testanalysator 7 gelangen. Generator und Analysator können örtlich weit voneinander entfernt sein; ihre Zeitbestimmungen basieren dann auf einer absoluten, lokal gültigen Zeitangabe. Die gesendeten Zellen enthalten zumindest eine Identifikationsnummer und einen Zeitstempel. Die Identifikationsnummer enthält eine ganze Zahl, die für eine Serie von Testzellen für jede zeitlich folgende Zelle um eins erhöht wird. Der Testanalysator 7 ist zumindest in der Lage, die Ankunftszeit einer Zelle festzuhalten und den Zeitstempel und die obgenannte Zahl zu extrahieren. Der Zeitstempel enthält die Angabe der Zeit, zu der der Testgenerator 6 die Testzelle ausgegeben hat.

Der Testgenerator 6 gibt einen Zellenstrom aus, der an die Vereinbarung angepasst ist. Hauptkenngrösse des Zellenstroms ist dessen Rate, das ist das (infinitesimale) Verhältnis der zählbaren Ereignisse zur Zeit. Eine Vereinbarung für die ATM-Zellenströme umfasst die Spitzenzellenrate (peak cell rate) bzw. den Spitzenbelegungsabstand (peak emission interval, T) und die Zellenverzögerungsschwankung (cell delay variation, τ), künftig wohl auch die aufrecht erhaltbare Zellenrate (sustainable cell rate) sowie die Stossnachgiebigkeit (burst tolerance). Gemäss den zur Zeit gültigen ATM-Spezifikationen überprüft in der Parameterüberwachung ein einfacher Zellenratenalgorithmus, ob die nächste Zelle-vor einer durch T und τ bestimmten, theoretischen Ankunftszeit eintrifft. Ist dies der Fall, wird die Zelle markiert oder ausgeschieden. Der Testgenerator 6 sendet die Zellen so, dass die Parameterüberwachung 2 zeitweise anspricht. Es könnte nun vorkommen, dass die Vermittlungseinheit selber kurzzeitig überlastet ist, zum Beispiel, weil gleichzeitig zu viel Verkehr für ein und denselben Ausgang anfällt und deshalb ein Puffer überläuft. Geschieht der Test im ansonst realen Betrieb ist diese Gefahr allerdings verschwindend klein. Der vom Testanalysator 7 empfangene, lückenbehaftete Zellenstrom gibt deshalb ein verlässliches Bild über die von der Parameterüberwachung 2 als nicht konform diskriminierten Zellen. Eine Unterscheidung der verschiedenen Zellverluste ist dann möglich, wenn die Parameterüberwachung die nicht konformen Zellen lediglich markiert, während die infolge Ueberlastung der Vermittlungseinheit verlorenen Zellen fehlen, was der Testanalysator 7 feststellen kann. Allerdings erhöht sich natürlich die Gefahr der Ueberlast, wenn die nicht der Vereinbarung gehorchenden Zellen vermittelt werden.

Die Figur 2 zeigt schematisch das zeitliche Eintreffen der Zellen 10 an einer bestimmten Stelle im Netz, auf einer ersten Zeitachse 8 am Ort des Testgenerators, auf einer zweiten Zeitachse 9 am Ort des Testanalysators. Zellen 10, die auf Grund einer Parameterüberwachung als nicht konform erkannt wurden, sind ausgeschieden worden. Am Ort des Testanalysators treffen deshalb weniger Zellen 10 ein, als am Ort des Testgenerators. Die als Beispiel willkürlich gezeichneten elf Zellen sind mit Identifikationsnummern 12 bis 22 versehen, was eine zeitliche Zuordnung der Ereignisse des Eintreffens bezüglich eines absoluten Zeitursprungs t0 ermöglicht. Jede Zelle 10 ist individuell gekennzeichnet durch eine mitgeführte Identifikationsnummer; ausserdem führt sie einen Zeitstempel mit. Die durch die mitgeführte Identifikationsnummer 12 gekennzeichnete Zelle - hier kurz mit Zelle 12 bezeichnet - enthält den Zeitstempel s12, eine Angabe zur Zeit, zu welcher der Testgenerator die Zelle 12 generiert hat, allenfalls verschoben um einen gleichbleibenden Wert. Da die Ausgabezeit einer Zelle nur unwesentlich und in bekannter Weise vom Zeitstempel abweicht, sind in der Figur 2 und den folgenden Betrachtungen die beiden Zeiten gleichgesetzt. Die Zelle 12 wird vom Generator zur Zeit s12 ausgegeben. Der Analysator misst die Zeit t12 des Eintreffens der Zelle - unter Umständen an einem weit entfernten Ort.

Bei der Zelle 12 handelt es sich um die erste beim Testanalysator eintreffende Zelle nach Beginn des Test. Die Zeitdifferenz zwischen t12 und s12 wird als Anfangszeit L12 festgehalten. Als nächste treffen die Zellen 13 und 14 ein. Bis dahin ist die Folge lückenlos. Der zeitliche Abstand zur Anfangszeit wird laufend aufdatiert, das heisst an Stelle von L12 wird L13, dann L14 festgehalten. Zur Zeit t18 trifft die Zelle 18 ein. Offensichtlich besteht eine Lücke in der Reihe der Zellen, der auf den Verlust der Zellen 15, 16 und 17 schliessen lässt; diese Zellen folgten sich zu dicht aufeinander und wurden von der Parameterüberwachung ausgeschieden. Der zuletzt aufdatierte zeitliche Abstand L14 wird nun als untere Schranke L[1] für die Antwortzeit festgehalten, der aktuelle zeitliche Abstand t18 - s12 als obere Schranke U[1]. Es handelt sich um exakte Messungen von Schranken, welche eine Abschätzung der Antwortzeit vom Ort der Messung im Netz aus gesehen zulassen.

Im Hinblick auf weitere Messungen ist die Zelle 18 wiederum die erste nicht diskriminierte Zelle. Die Zeitdifferenz zwischen t18 und dem Zeitstempel s18 der Zelle 18 wird als neue Anfangszeit L18 festgehalten. Der zuvor geschilderte Vorgang wiederholt sich in analoger Weise. Die zeitlichen Abstände L19 und L20 werden aufdatiert. Zelle 21 folgt zu dicht auf Zelle 20 und wird deshalb verworfen. Der zuletzt festgehaltene zeitliche Abstand L20 wird als untere Schranke L[2] abgespeichert, jener zwischen t22 und s18 als obere Schranke U[2], dazu die Anzahl fehlender Zellen, hier eine. Zur Unterscheidung der abgespeicherten Werte sind diese mit einem laufenden Index, formalisiert durch die eckigen Klammern, versehen.

Eine Fortsetzung dieses Verfahrens erlaubt eine laufende oder eine nachträgliche statistische Auswertung. Diesbezügliche Methoden sind dem Fachmann geläufig. Eine derartige Auswertung lässt Rückschlüsse auf die Arbeitsweise der Parameterüberwachung zu. Beispielsweise kann die Korrelation zwischen der Anzahl verworfener Zellen und der Antwortzeit von Interesse sein. Aber auch eine Definition der Antwortzeit als statistische Grösse wird ermöglicht.

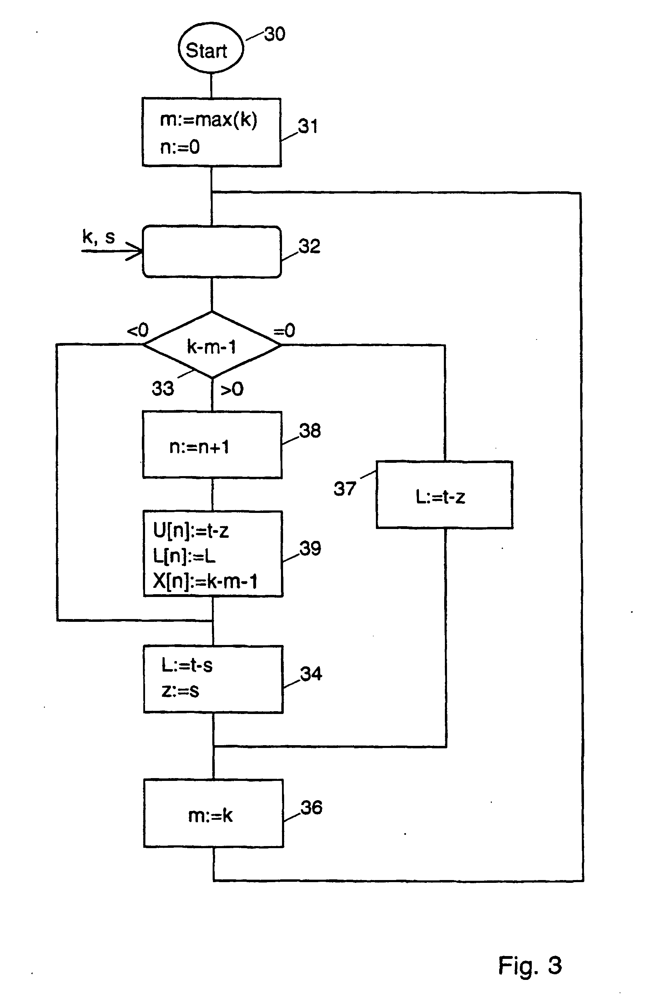

Die einzelnen Schritte des Verfahrens sind anhand des Flussdiagramms der Figur 3 eingehender erläutert. Beim Start 30 wird in einer erst- und einmaligen Festlegung 31 die Vergleichszahl m für die Identifikationsnummern k der Zellen auf einen Anfangswert gesetzt, der mindestens so gross ist wie die höchste vorkommende Identifikationsnummer der ersten ankommenden Zelle; ferner wird der Index n für die Speicherung der gemessenen Werte auf 0 gesetzt. Danach wird eine Warteposition 32 eingenommen, bis eine Zelle eintrifft, welche mit einer Identifikationsnummer k und einem Zeitstempel s versehen ist. Der anschliessende Vergleich 33 von k mit m ergibt beim ersten Durchlauf ein k kleiner als m+1, was zur Initialisierung 34 führt, in der die laufend aufzudatierende Zeit L auf den Wert der Anfangszeit als Differenz der aktuellen Zeit t zum Zeitstempel s gesetzt und der verwendete Zeitstempel s als vorübergehende Konstante z festgehalten werden. Danach mündet die Initialisierung mit der Zuordnung 36 der Identifikationsnummer k zur Vergleichszahl m in den Zyklus des laufenden Ueberwachens und Aufdatierens, worin zur Warteposition 32 zurückgekehrt wird. Der genannte Zyklus besteht aus den Schritten Warteposition 32, Vergleich 33, Aufdatieren 37 des zeitlichen Abstandes L und Zuordnung 36 der Vergleichszahl m.

Nach dem nächsten Eintreffen einer Zelle mit neuer Identifikationsnummer k und neuem Zeitstempel s wird der anschliessende Vergleich 33 nie mehr einen Wert von k ergeben, der kleiner ist als m+1. Solange der Zellenstrom kein Lücke aufweist, sich die Identifikationsnummern k also jeweils um 1 erhöhen, mündet der Vergleich 33 in den Zyklus des laufenden Ueberwachens und Aufdatierens. Der zeitliche Abstand L wird dabei als Differenz der aktuellen Zeit zum massgebenden Zeitstempel, der beim Initialisieren als vorübergehende Konstante z festgehalten wurde, aufdatiert. Danach wird die Vergleichszahl m gleich der aktuellen Identifikationsnummer gesetzt und zur Warteposition 32 zurückgekehrt.

An dieser Stelle sei angemerkt, dass das Verfahren mit der Inkrementierung der Identifikationsnummer k zwar die bevorzugte, aber nur eine von vielen Möglichkeiten darstellt. Wichtig ist lediglich, dass die Folge bekannt und überprüfbar ist. Die Zuordnung 36 und der Vergleich 33 sind der gewählten Möglichkeit anzupassen. Ebenso sind das geschilderte Vorgehen für den Start und das Einmünden in den Zyklus wie auch andere Details der Schilderung an diesem Fall als Beispiele zu verstehen und nicht als Beschränkung in den Möglichkeiten, die ein Fachmann in diesem Zusammenhang ohne weiteres auszunützen versteht.

Ist eine Zelle ausgefallen, das heisst ergibt der Vergleich 33 einen Wert von k grösser als m+1, so verzweigt das Verfahren zum Schritt des Abspeicherns. Zunächst wird der Speicherindex n inkrementiert (Inkrementierung 38). Danach werden in einem Speicherschritt 39 die drei interessierenden, gemessenen Werte, die obere Schranke U[n] für die Antwortzeit, die untere Schranke L[n] für die Antwortzeit und die Anzahl verworfener Zellen X[n] abgelegt. Dabei ist die gesuchte Anzahl X[n] gleich der Differenz zwischen k und m+1, die untere Schranke L[n] ist gleich dem zuletzt festgehaltenen zeitlichen Abstand und die obere Schranke U[n] berechnet sich gleich wie jeweils der zeitliche Abstand L.

Der Index n wird nur gebraucht, wenn die Werte von mehr als eine Messung hintereinander registriert werden sollen. Die Figur 3 zeigt denn auch die unmittelbare Fortsetzung des Verfahrens nach dem Abspeichern der Messwerte, indem als nächster Schritt eine erneute Initialisierung 34 folgt. Es ist dem Fachmann überlassen, die ihm geeignet erscheinende Methode für den Messabbruch zu verwenden. Denkbar sind zum Beispiel eine Begrenzung durch den Index n, eine Begrenzung der Messzeit usw., oder einfach die Beendigung durch Abschalten des Tests.

## Patentansprüche

1. Verfahren zum Ermitteln der Anzahl X[n] der als Folge einer Parameterüberwachung (2) an einer Schnittstelle (5') eines digitalen Netzes diskriminierten digitalen Dateneinheiten und zur Abschätzung der Antwortzeit an der Stelle der Ermittlung (5") im Netz, **gekennzeichnet durch** folgende Verfahrensschritte:
- Initialisieren einer Anfangszeit (L12) bei Eintreffen der ersten nicht diskriminierten digitalen Dateneinheit (12);
- laufendes Ueberwachen der Lückenlosigkeit der Folge der eintreffenden, nicht diskriminerten Dateneinheiten anhand einer von der Dateneinheit mitgeführten Identifikationsnummer (k) und laufendes Aufdatieren des zeitlichen Abstands (L) der Zeit (t) des Eintreffens der Dateneinheit zum Beginn der Anfangszeit (z);
- Abspeichern des zuletzt aufdatierten zeitlichen Abstands als untere Schranke L[n] für die Antwortzeit, des aktuellen zeitlichen Abstands als obere Schranke U[n] für die Antwortzeit sowie die Anzahl der in der Folge fehlenden Identifikationsnummern als Anzahl X[n] diskriminierter Dateneinheiten, nachdem das Ueberwachen eine Lücke aufgedeckt hat.

2. Verfahren nach Anspruch 1, **dadurch gekennzeichnet, dass** die Anfangszeit (L12) als Differenz zwischen der aktuellen Zeit (t12) des Eintreffens der ersten nicht diskriminierten digitalen Dateneinheit (12) und dem in der Dateneinheit mitgeführten Zeitstempel (s12) initialisiert wird.

3. Verfahren nach Anspruch 1 oder 2, **dadurch gekennzeichnet, dass** die nichtdiskriminierte digitale Dateneinheit (18), welche die Lücke aufgedeckt hat, jeweils als erste nichtdiskriminierte digitale Dateneinheit der erneuten Initialisierung dient, so dass die Verfahrensschritte wiederholt durchlaufen werden, wobei ein Indexzähler n mitläuft und das Abspeichern der drei Werte L[n], U[n], X[n] indiziert erfolgt.

4. Verfahren nach Anspruch 3, **dadurch gekennzeichnet, dass** in einem weiteren Verfahrensschritt die indiziert gespeicherten Werte statistisch ausgewertet werden.

5. Verfahren nach Anspruch 4, **dadurch gekennzeichnet, dass** in separaten Verfahrensschritten statistische Daten über das zeitliche und zahlenmässige Eintreffen nichtdiskriminierter digitaler Dateneinheiten erhoben und in die statistische Auswertung einbezogen werden.

## Claims

1. Method of determining the number X[n] of digital data units which are discriminated as a consequence of parameter monitoring (2) at an interface (5') of a digital network, and estimating the response time at the position of the determination (5") in the network, **characterized by** the following method steps:
- initialising a starting time (L12) on the arrival of the first non-discriminated digital data unit (12);
- continuous monitoring of the absence of gaps in the sequence of incoming non-discriminated digital data units on the basis of an identification number (k) which is carried with the data unit, and continuous updating of the time interval (L) between the time (t) of the arrival of the data unit and the start of the starting time (z);
- storing the last updated time interval as the lower limit L[n] for the response time, the current time interval as the upper limit U[n] for the response time, and the number of identification numbers which are absent from the sequence as the number X[n] of discriminated data units after the monitoring has discovered a gap.

2. Method according to Claim 1, **characterized in that** the starting time (L12) is initialised as the difference between the current time (t12) of the arrival of the first non-discriminated digital data unit (12) and the time stamp (s12) which is carried in the data unit.

3. Method according to Claim 1 or 2, **characterized in that** the non-discriminated digital data unit (18) which has revealed the gap is used as the first non-discriminated digital data unit of the renewed initialisation, so that the method steps are run through repeatedly, an index counter (n) runs with them and the three values L[n], U[n], X[n] are stored indexed.

4. Method according to Claim 3, **characterized in that** in a further method step the indexed stored values are analysed statistically.

5. Method according to Claim 4, **characterized in that** in separate method steps, statistical data about the arrival of non-discriminated digital data units, by time and number, is captured and included in the statistical analysis.

## Revendications

1. Procédé pour déterminer le nombre X[n] des unités de données numériques discriminées en tant que suite d'une surveillance de paramètres (2) au niveau d'une interface (5') d'un réseau numérique, et pour évaluer le temps de la réponse à l'endroit de la détermination (5") dans le réseau, **caractérisé par** les étapes de procédé suivantes :
- initialisation du temps de départ (L12) lors de l'arrivée de la première unité de données numérique (12) non discriminée ;
- surveillance continuelle de la continuité ou non interruption de la suite des unités de données non discriminées arrivant, au regard d'un numéro d'identification (k) accompagnant l'unité de données, et nouveau datage continuel de l'intervalle de temps (L) de l'instant (t) de l'arrivée de l'unité de données au début du temps de départ (z) ;
- mémorisation de l'intervalle de temps daté en dernier lieu en tant que limite inférieure L[n] pour le temps de la réponse, de l'intervalle de temps actuel en tant que limite supérieure U[n] pour le temps de la réponse, ainsi que du nombre des numéros d'identification manquant dans la suite en tant que nombre X[n] d'unités de données discriminées, après que la surveillance ait détecté une interruption ou discontinuité.

2. Procédé selon la revendication 1, **caractérisé en ce que** le temps de départ (L12) est initialisé en tant que différence entre l'instant actuel (t12) de l'arrivée de la première unité de données numérique (12) non discriminée et le timbre à date (s12) accompagnant l'unité de données.

3. Procédé selon la revendication 1 ou 2, **caractérisé en ce que** l'unité de données numérique non discriminée (18), qui a décelé l'interruption, sert respectivement en tant que première unité de données numérique non discriminée, à la nouvelle initialisation, de sorte que les étapes de procédé sont à nouveau répétées, un compteur d'indice n suivant cette marche et la mémorisation des trois valeurs L[n], U[n] et X[n] s'effectuant de manière indicée.

4. Procédé selon la revendication 3, **caractérisé en ce que** dans une autre étape de procédé, les valeurs mémorisées indicées sont exploitées ou traitées par voie statistique.

5. Procédé selon la revendication 4, **caractérisé en ce que** dans des étapes de procédé séparées, des données statistiques concernant les instants et le nombre des entrées d'unités de données numériques non discriminées sont décelées et intégrées dans le traitement statistique
